(19) Europäisches Patentamt
European Patent Office
Office européen des brevets

(11) **EP 2 736 002 A1**

(12) **EUROPEAN PATENT APPLICATION**

(43) Date of publication:
**28.05.2014 Bulletin 2014/22**

(51) Int Cl.:
***G06Q 10/00*** *(2012.01)*

(21) Application number: **12007880.3**

(22) Date of filing: **22.11.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Baden-Württemberg Stiftung gGmbH 70191 Stuttgart (DE)**

(72) Inventors:
• **Schilling, Björn**
  **71083 Herrenberg (DE)**
• **Koldehofe, Boris**
  **70567 Stuttgart (DE)**
• **Rothermel, Kurt**
  **71272 Renningen (DE)**
• **Ramachandran, Kishore**
  **Lilburn, GA 30047 (US)**

(74) Representative: **Müller-Boré & Partner Patentanwälte PartG mbB Friedenheimer Brücke 21 80639 München (DE)**

(54) **Method, system and computer program product for enforcing access to event attributes of event streams in a complex event processing system**

(57) Computer-implemented method for enforcing access to event attributes of event streams in a complex event processing system, the method comprising: receiving a request for an outbound event attribute of a plurality of outbound event attributes of an outbound event stream; determining a processor component of a plurality of processor components, the processor component producing one or more outbound event attributes of the outbound event stream; determining one or more inbound event attributes of one or more inbound event streams, wherein the one or more inbound event attributes of the one or more inbound event streams are processed by the processor component to produce the one or more outbound event attributes of the outbound event stream; determining a dependency graph between the one or more inbound event attributes of the processor component and the one or more outbound event attributes of the processor component; determining an access policy comprising access requirements of the one or more outbound event attributes, including the step of: inheriting, for each inbound event attribute, access requirements associated with each of the inbound event attributes according to dependencies of the dependency graph; associating the access requirements of the determined access policy to the corresponding one or more outbound event attributes; comparing the access requirements of the requested outbound event attribute with access rights of the requester; and if the access rights of the requester fulfil the access requirements of the requested outbound event attribute: allowing to transfer the requested outbound event attribute to the requester.

Fig. 1

**Description**

**Field of the Invention**

The present application relates to access policy consolidation for complex event processing in a complex event processing network. In particular, the present application relates to a method for enforcing access to event attributes of event streams in a complex event processing network, a system and a computer program product.

**Background**

In today's business processes, it is important to detect inconsistencies and/or failures early. For example, in manufacturing or logistic processes, items are tracked continuously to detect loss or to reroute them during transport. To answer this need, complex event processing (CEP) systems are of increasing importance in today's business environments. The goal of CEP systems is to detect situations by observing and processing events which emerge from sensors all over the world, e.g. from packet tracking devices. CEP systems consist of processing components or operators which create complex events based on other events they collect or retrieve.

In traditional CEP systems, processing components were used in a central way to correlate events and detect situations based on the correlated events. The emerging increase of event sources and event consumers has lead towards a decentralised handling of events. In addition, the collaborative nature of today's economy results in large-scale networks, where different users, companies, and/or groups exchange events. Thus, current event processing systems are heterogeneous in terms of processing capabilities and technologies, consist of differing participants, and are spread across multiple security domains, e.g. physical and/or logical computer networks of different enterprises or companies of different enterprises.

Current work in providing security for complex event processing systems provides confidentiality of data, authorisation of network participants as well as encryption of event data. In particular, public key infrastructures are applied to complex event processing systems using a publish/subscribe architecture in order to provide confidentiality of data, authorisation of network participants as well as encryption of event data.

While the interoperability of CEP systems increases, it might be not feasible for a central instance to manage access control for the whole network. Instead, every participant, e.g. every provider of events and/or event attributes, may want to control access to the data, e.g. the events and/or the event attributes, by himself. Since events and/or event attributes may be used to create complex events and/or complex event attributes, the provider of the original event and/or event attribute may lose its influence on access control, once another participant, e.g. an event consumer and/or another provider, of the CEP system processes the events and/or the event attributes.

Therefore, according to an aspect, it is a problem to improve flexibility, security and ease of use when enforcing access control to events and/or event attributes in complex event processing (CEP) systems.

The problem is solved according to the independent claims. Preferred embodiments are defined in the dependent claims.

**Method according to an aspect**

According to an aspect, a method for enforcing access to event attributes of event streams in a complex event processing system. Enforcing access may comprise granting or denying access to event attributes. As an example, an event attribute may comprise a name-value pair, a unique identifier (e.g. a cryptographic hash value, a unified resource identifier (URI), a unified resource locator (URL)), an event identifying a change in a state of e.g. a sensor, and/or an event raised by a software component of a software application. For example, the event may comprise a Java event, a Radio Frequency Identification (RFID) event, a barcode scanning event, an event issued by a sensor in an intelligent power consumption measuring device, and/or any other event issued by a sensor and/or software component of a software application. The events may comprise time-continuous events, e.g. events being continuously issued in a certain time frame, time discrete events, e.g. events issued each 2 seconds, and/or events triggered by a certain condition, e.g. an event of a sensor reading an RFID tag of a parcel passing the sensor. An event stream may comprise a continuous sequence of events and/or event attributes for which an end of the event stream might not be determined in advance. The event stream may use any type of events. A complex event processing system may perform event processing that combines data from multiple sources, e.g. multiple event producers, to infer events and/or patterns that suggest more complicated and/or complex circumstances. In a complex event processing system, the event may be happening across various layers of an organisation such as sales leads, orders and/or customer service calls. And/or, the events may be news items, text messages, social media posts, stock market feeds, traffic reports, weather reports, security events and/or any other kind of data which may be distributed as events and/or event attributes for further processing in a complex event processing system. The complex event processing system may enable organisations to process and analyse event attributes of event streams in real time.

According to the present invention, the method comprises receiving a request for an outbound event attribute of a plurality of event attributes. Receiving the request may comprise a requester subscribing to a published stream of a publish/subscribe system. The request may be received via a Java Messaging Service (JMS), a web service, an application interface and/or via an Internet infrastructure. The request may comprise a message including authentication information, e.g. username and password, a security token and/or a session key. The request may comprise information regarding the security domain of the requester. The request may comprise information regarding the outbound event attribute which the requester is requesting. The request may further comprise requests for one or more outbound event attributes. The request may also comprise information regarding which processing component of the requester may process the requested outbound event attribute. Preferably, the request enables to identify access rights of the requester. The outbound event attribute may be an event attribute which is produced by a processor component. An inbound event attribute may be an event attribute which is used and/or processed by a processor component to produce the outbound event attribute. Each processor component may comprise one or more inbound event attributes and one or more outbound event attributes. The one or more outbound event attributes may be used and/or processed as inbound event attributes of another processor component.

According to the present invention, the method further comprises determining a processor component of a plurality of processor components, the processor component producing one or more outbound event attributes of the outbound event stream. Determining a processor component may comprise querying the processor component in a database and/or a file system and/or selecting the processor component according to one or more outbound event attributes which the processor component produces. The processor component may process one or more inbound event attributes of one or more inbound event streams and produces one or more outbound event attributes of one or more outbound event streams. The processor component may apply queries and/or processing instructions to one or more incoming event attributes, e.g. the queries and/or the processing instructions may be written in a Domain Specific Language (DSL) for processing events and/or event attributes and/or in an Event Processing Language (EPL) which is a declarative language for dealing with high frequency time-based event data, e.g. values of event attributes. The processor component may filter and/or aggregate one or more incoming event attributes. The processor component may apply pattern matching to the one or more incoming event attributes. The processor component may join inbound event streams. The output of the processor component may comprise one or more outbound event attributes. The processor component may output one or more outbound event streams, e.g. an outbound event stream for each outbound event attribute and/or an outbound event stream for more than one outbound event attribute.

Advantageously, by using the processor component, one or more inbound event attributes can be filtered, aggregated and/or modified to produce one or more outbound event attributes of one or more outbound event streams in real time. When applying a chain of processing components to the inbound and outbound event attributes, different processing steps may be applied to inbound event attributes of inbound event stream to produce outbound event attributes of outbound event streams in a flexible manner.

According the present invention, the method further comprises determining one or more inbound event attributes of one or more inbound event streams, wherein the one or more inbound event attributes of the one or more inbound event streams are used by the processing component to produce the one or more outbound event attributes of the outbound event stream.

Determining one or more inbound event attributes of one or more inbound event streams may comprise receiving one or more inbound event streams comprising the one or more event attributes from sensors, devices and/or application components. Determining the one or more inbound event attributes may further comprise adapting the format of one or more inbound event attributes to a format which the processor component may be able to process. In some cases, previous to determining one or more inbound event attributes of one or more inbound event streams, one or more inbound event streams have to be established. An inbound event stream may comprise one or more logical and/or physical event channels. For example, logical and/or physical event channels may be implemented using socket communication and/or transmission control protocol (TCP) communication and/or user datagram protocol (UDP) communication and/or web services. A sender sending an inbound event/inbound event attribute via an inbound event stream may specify a concrete address, e.g. an IP address and/or port, which may identify a host and/or a component of the host which controls the receiving of the inbound events and/or inbound event attributes. For sending inbound events/inbound event attributes, the sender may serialize the inbound events/inbound event attributes and the receiver may deserialize the inbound events/inbound event attributes. Receiving of an inbound event and/or an inbound event attribute may be implemented using a listener component which listens to inbound events and/or inbound event attributes of the inbound event stream. The listener component may add inbound events/inbound event attributes to an inbound queue using a producer-consumer synchronization paradigm. If inbound events/inbound event attributes are received via one or more inbound event streams, the processor component may be activated and the activated processor component may pull one or more inbound events/inbound event attributes from the inbound queue to process/compute the received inbound events/inbound event attributes and to produce one or more outbound events/outbound event attributes. Produced output events/output event attributes may be added to corresponding outbound queues. From outbound event queues, outbound events/outbound event attributes may be prepared to be transferred via one or more outbound event streams. Preparing to transfer may comprise establishing a communication channel to the receiving host and/or the receiving processor component being executed on the receiving host.

Advantageously, the inbound event attributes are received and processed in a manner that the processing component is able to process the one or more inbound event attributes of the one or more inbound event streams in order to produce the one or more outbound event attributes of the one or more outbound event streams.

According to the present invention, the method further comprises:

- determining a dependency graph between the one or more inbound event attributes of the processing component and the one or more outbound event attributes of the processing component;
- determining an access policy comprising access requirements of the one or more outbound event attributes, including the step of:
- inheriting, for each inbound event attribute, access requirements associated with each of the inbound event attributes according to dependencies of the dependency graph.

The method may further comprise executing the processor component. When executing the processor component, the processor component may process one or more inbound event attributes to produce one or more outbound event attributes. The processor component may include a correlation function which performs the processing of the processor component. The correlation function may correlate one or more inbound event attributes to produce one or more outbound event attributes. In addition, the processing component includes the steps of determining a dependency graph and an access policy. The dependency graph may comprise a directed graph between at least one inbound event attribute and at least one outbound event attribute. Nodes of the dependency graph may represent the inbound event attributes and the outbound event attributes of one or more processor components. For example, if two inbound event attributes are processed by the processor component for producing and/or determining a particular outbound event attribute, the dependency graph may include two directed edges indicating dependencies between the two inbound event attributes and the outbound event attribute. The dependency graph may comprise for each outbound event attribute a path starting from the corresponding one or more inbound event attributes which are used and/or processed to determine the respective outbound event attribute and ending at the outbound event attribute. The dependency graph may be determined once the processor component may be executed the first time on a particular host. The dependency graph may be re-created when the dependency between the one or more inbound event attributes and the one or more outbound event attributes of the processor component may change. The one or more processor components may comprise computation operations, e.g. correlation operations, in a pre-defined format which may be defined by the system executing the processor compoenent. Each computation operation of a processor component may comprise the following structure:

i) a specification, e.g. an identifier and/or a pattern, of the inbound events and/or the inbound event attributes which should be computed by the computation operation;
ii) one or more conditions which the inbound events and/or the inbound event attributes should fulfil, e.g time conditions and/or value ranges and/or security conditions and/or filter conditions;
iii) a computation specification which defines how the inbound events and/or the inbound event attributes of the inbound events should be computed, e.g. add value x of a first inbound event attribute to value y of a second inbound event attribute and/or apply a filter pattern to an inbound event and/or an inbound event attribute,
iv) a specification of one or more resulting/outbound events and/or outbound event attributes, e.g. a data structure and/or a data format and/or a data structure template of the one or more outbound event attributes and/or outbound events.

Depending upon the structure of a computation operation of a processor component, dependencies between the inbound events and/or the inbound event attributes of a computation operation and the outbound event and the outbound event attributes of a computation operation may be determined. In particular, the specification of the inbound events and/or inbound event attributes and/or outbound events and/or outbound event attributes and/or the computation specification may be parsed to determine the dependencies between the inbound events and/or inbound event attributes and the outbound event and/or the outbound event attributes. Preferably, if one or more dependencies are determined, corresponding dependencies may be added to the dependency graph.

Determining the access policy may comprise determining access requirements of the one or more outbound event attributes dynamically. The access requirements may define access rights regarding security domains, computer networks, devices and/or application components which may be allowed to access an outbound event attribute. The security domain may comprise a particular computer network and/or a collection of computers of the requester. As a general rule, a computer network within different security domains may be kept separate from other computer networks by using e.g. separate network segments and/or firewalls. The security domain may also comprise an application or a collection of applications that trust a common group of users and/or devices for authentication, authorisation and/or session management. Preferably, an access requirement may specify which security domain may access an outbound event attribute. For determining the access requirements of the one or more outbound event attributes, the access requirements associated with each of the inbound event attributes may be inherited according to the dependencies of the dependency graph. Inheriting according to the dependencies of the dependency graph may include starting from an inbound event attribute and following a path defined by the dependencies to an outbound event attribute. At each node along the path from the inbound event attribute to the outbound event attribute, the access requirements of the corresponding inbound and outbound event attributes may be added to the access policy. Since an outbound event attribute may depend from more than one inbound event attribute, multiple inheritances may be performed when determining the access requirements of one or more outbound event attributes.

Advantageously, the access policy may be determined dynamically according to a dependency graph. By inheriting the access requirements along paths of the dependency graph, the access policy may be created in a computationally efficient manner. Since the access policy comprises access requirements of the one or more outbound event attributes, access control may be enforced at any time in the CEP system for the one or more outbound event attributes, thus increasing the flexibility when enforcing the access policy. Further, changes to the access requirements of the inbound event attributes may be dynamically propagated to the access requirements of the outbound event attributes. For example, if an event producer may restrict the access requirements, the restricted access requirements may be dynamically applied to outbound event attributes processing the inbound event attribute. Flexible and fast modification of access requirements and access policies may be implemented. In addition, inheriting the access requirements may ensure that access to the one or more outbound event attributes may be based on some or all access requirements of the inbound event attributes.

According to the present invention, the method further comprises associating the access requirements of the determined access policy with the corresponding one or more outbound event attributes.

Associating the access policy may comprise associating the access requirements of the access policy to the corresponding outbound event attribute. Associating may comprise linking the access policy to the outbound event attribute. For example, associating may be implemented by adding a reference to the event attribute to the access policy. For example, service-oriented architecture frameworks, e.g. Open Service Integration Maturity Model (OSIMM) and/or SOA Governance Framework and/or SOA Ontology, and/or web services standards, such as WS-Security and/or WS-SecurityPolicy may be used to implement the access policy and the association between the one or more outbound event attributes and the access policy. Preferably, the access policy may be associated to each of the one or more outbound event attributes. In some cases, an access policy may be associated to all of the one or more outbound event attributes.

Advantageously, access to each of the one or more outbound event attributes may be controlled by access policies. By associating the access policy to the one or more outbound event attributes, fine-grained access control to each individual outbound event attribute may be implemented.

According to the present invention, the method may further comprise comparing the access requirements of the requested outbound event attribute with access rights of the requester.

Comparing the access requirements may comprise determining whether each access requirement associated with the outbound event attribute matches the access rights associated with the requester. Access requirements may be implemented using access control lists, role based access control, and/or any other access control mechanisms. For example, comparing the access requirements may comprise comparing whether the requester belongs to a security domain specified in the access requirement of the outbound event attribute. For example, comparing the access requirements may comprise checking whether the requester has a valid security token or whether the device of the requester is within a specified IP range of devices specified in the access requirements.

Advantageously, comparing the access requirements of the access policy of the requested outbound event attribute with access rights of the requester enables fine granular access control to the outbound event attributes based on the access rights of the requester and the access requirements specified by an event producer. Thereby the privacy of inbound event attributes may be assured, since the access requirements of the inbound event attributes may be enforced when comparing the access requirements of the outbound event attribute with the access rights of the requester.

According to the present invention, the method further comprises:

- if the access rights of the requester fulfil the access requirements of the requested outbound event attribute:
- allowing to transfer the requested outbound event attribute to the requester.

If the access rights of the requester fulfil the access requirements of the requested outbound event attribute, the processor component may allow transferring the requested outbound event attribute. Allowing transferring the requested outbound event attribute may comprise allowing transferring the associated access policy to the requester. For example, if the access rights of the requester specify that the requester belongs to security domain A and the access requirements of the requested outbound event attribute specify that all requesters of the security domain A are allowed to access the requested outbound event attribute, transfer of the requested outbound event attribute to the requester may be allowed. Transferring may comprise sending a message or a stream of messages including the outbound event attributes to the requester. In addition, transferring may comprise sending or streaming the access policy associated with the outbound event attribute to the requester. The access policy may be allowed to transfer before transferring the outbound event attribute.

Advantageously, access control may be enforced for each of outbound event attribute depending on the requester. Therefore, the outbound event attributes may be allowed to transfer independently from each other according to the dynamically determined access policy. Consequently, privacy of the inbound event attributes may be enforced and flexibility of allowing transferring the one or more outbound event attributes may be improved.

**Further embodiments of the method**

In an embodiment, the method may further comprise:

wherein inheriting the access requirements comprises adding the access requirements associated with each of the inbound event attributes processed by the processor component to the access policy of the one or more outbound event attributes.

Adding the access requirements associated with each of the inbound event attributes may comprise consolidating access requirements into a new access policy of an outbound event attribute. Since the access requirements may be inherited along the dependencies of the dependency graph, additional access requirements may be added at each step of the inheritance hierarchy to determine the new access policy. Beside the access requirements of the inbound event attribute, additional access requirements of the outbound event attribute itself may also be added to the new access policy of the outbound event attribute. The additional access requirements may be directly associated with the outbound event attribute so that access requirements of the inbound event attributes and additional access requirements of the outbound event attribute may be added to the access policy associated with the outbound event attribute.

Advantageously, adding the access requirements associated with each of the inbound event attributes processed by the processor component to the access policy of the one or more outbound event attributes may consolidate the inbound event attribute to a single access policy for the outbound event attribute. The newly determined access policy may be easily transferred to a requester of the outbound event attribute so that the privacy of the outbound event attribute may be ensured in a simplified manner, since only the consolidated access policy may be processed and enforced for each of the outbound event attributes.

In a further embodiment, the method may further comprise:

merging duplicate access requirements of the access requirements added to the access policy of the one or more outbound event attributes.

Merging duplicate access requirements of the access requirements added to the access policy may comprise removing and/or deleting duplicate access requirements. Merging the access requirements may include comparing a logic relation specifying the access requirement to determine whether an access requirement is a duplicate access requirement of another access requirement. For example, if a first access requirement of a first outbound event attribute specifies that the requester is required to be a member of a first security domain and a second access requirement of the first outbound event attribute specifies that the requester is required to be a member of a first or second security domain, the second access requirement may be deleted since the first access requirement defines a more restrictive access requirement as compared to the second access requirement. In order to prevent the privacy of the inbound event attributes to be violated, the more restrictive access requirements may be selected when merging duplicate access requirements.

Advantageously, the size of the access policies associated with the outbound event attributes may be reduced. Consequently, also the communication bandwidth required for transferring the access policies to the requester may be reduced. Furthermore, the computational effort for processing and enforcing the access policy may be decreased since less access requirements may have to be fulfilled by the requester of an outbound event attribute.

In another embodiment, the method may further comprise:

wherein an obfuscation threshold is associated with each of the inbound event attributes, wherein an obfuscation policy comprises one or more obfuscation thresholds of the one or more inbound event attributes.

Obfuscation may relate to the hiding of the values of the inbound event attributes when producing the outbound event attributes. The obfuscation threshold may indicate how good the values of the inbound event attributes are hidden by the processor component when producing values of the outbound event attributes. In other words, the obfuscation threshold may define a threshold indicating the probability of an expected value of the inbound event attribute to occur in the values of the outbound event attribute. For example, if the obfuscation threshold is 0.9, the values of the inbound event attribute are well obfuscated. In other words, there may be only a probability of 0.1 that the values of the inbound event attribute may occur in the values of the outbound event attributes and/or may be inferred from the values of the outbound event attributes. The obfuscation threshold may be specified by the event producer and may be used to determine whether the values of the inbound event attributes are obfuscated at a particular level.

Advantageously, the obfuscation threshold and the obfuscation policy may simplify the use of the access policy in CEP systems. The obfuscation threshold may enable the event producer to define when the access policy may be ignored based on the obfuscation of the values of the inbound event attributes.

In a further embodiment, the method may further comprise:

wherein the one or more inbound event attributes of the one or more inbound event streams may comprise event attributes produced by at least one of one or more sensors and one or more application components.

The one or more sensors may comprise RFID tags, intelligent power consumption meter sensor, GPS sensors. The application components may comprise firewalls, RSS feeds, ATOM feeds. The application components and sensors may use a common interface, e.g. a web service interface to provide events which may be used as inbound events of the processor components of the CEP system.

In a further embodiment, the method may further comprise:

wherein the processor component comprises a correlation function applicable to the one or more inbound event attributes of the one or more inbound event streams,
wherein the correlation function correlates the inbound event attributes to produce the outbound event attributes.

The correlation function may comprise queries, aggregation function, and/or functions for filtering and merging of inbound event attributes to produce outbound event attributes. The correlation function may correlate the inbound event attributes in a certain timeframe or according to a certain number of received inbound events including the inbound event attributes. When correlating the inbound event attributes, the correlation function may obfuscate the inbound event attributes so that the produced outbound event attribute may have a different value than the values of the one or more inbound event attributes.

In a further embodiment, the method may further comprise:

wherein each node of the dependency graph represents either an inbound event attribute or an outbound event attribute,
wherein each edge of the dependency graph represents a dependency between one of the inbound event attributes and one of the outbound event attributes.

The nodes and edges of the dependency graph may determine one or more paths starting from a node representing an inbound event attribute to a node representing an outbound event attribute. Advantageously, the use of the dependency graph may enable an automated, graph-based determination of the access policy taking into account all inbound event attributes which are processed by a processor component to produce an outbound event attribute.

In a preferred embodiment, the method may further comprise:

if the access rights of the requester do not fulfil the access requirements of the requested outbound event attribute:

- calculating an obfuscation value between each pair of inbound and outbound event attributes of the processor component;
- identify the obfuscation threshold of the obfuscation policy associated with each of the one or more inbound event attributes.

If the access rights of the requester do not fulfil the access requirements of the access policy of the requested outbound event attribute, it may be an obfuscation value determined or calculated. The obfuscation value may define the expected value of obfuscation achieved by the processor component and in particular by the correlation function of the processor component. The obfuscation value may relate to entropy, e.g. Shannon entropy, between a value of the inbound event attribute and a value of the outbound event attribute with respect to a particular processor component.

Preferably, the obfuscation value may relate to a probability indicating how likely a value of the inbound event attribute may be inferred from a known value of an outbound event attribute.

Advantageously, if the requester does not have the access rights to access the requested one or more outbound event attributes, an obfuscation value is calculated to determine the level of obfuscation achieved by the processor component. Based on the calculated obfuscation value, the requester may receive access to the outbound event attribute.

In another embodiment, the method may further comprise:

if the obfuscation value is greater or equal than the obfuscation threshold:

ignoring the access policy of the outbound event attribute;
allowing to transfer the outbound event attribute to the requester.

If the obfuscation value is greater of equal than the obfuscation threshold, the method may ignore the associated access policy of the outbound event attribute. Ignoring the associated access policy may comprise granting access to the outbound event attribute in case the requester does not have matching access rights to access the requested outbound event attribute. Preferably, ignoring the associated access policy may comprise associating an empty access policy to the outbound event attribute wherein the empty access policy indicates that each subsequent requester in a chain of processing components is allowed to access the event attribute without any access restrictions. Optionally, ignoring the associated access policy may comprise ignoring the access policy only for the requester which has requested the outbound event attribute. In addition, if the obfuscation value is greater or equal that the obfuscation threshold, the outbound event attribute may be allowed to be transferred to the requester.

Advantageously, the requester may be allowed to receive the requested one or more outbound event attributes even if the requester does not have the required access rights as specified in the access policy of the requested outbound event attribute. Depending on the obfuscation value, a flexible and privacy-preserving approach may be provided which enables access to outbound event attributes by ignoring the access policy of the requested outbound event attribute. Fewer resources for managing access rights may be required, e.g. less bandwidth for communication access policies between the processor components. In addition, the flexibility of providing access to event attributes of events streams is improved since depending on the obfuscation value access rights for accessing an outbound event attribute may be removed, by e.g. associating an empty access policy to the outbound event attribute. In addition, the obfuscation value may improve access to event attribute dependent on the requester requesting the outbound event attribute and/or the processor component applied to the outbound event attribute by the requester.

In a further embodiment, the method may further comprise:

if the obfuscation value is less than the obfuscation threshold:

denying access to the outgoing event attribute.

If the obfuscation value is less than the obfuscation threshold, access to the outgoing event attribute is denied to the requester. For example, if the processor component comprises a filter operation, the filter operation may filter some inbound event attributes to produce an outbound event attribute. The outbound event attribute may include filtered inbound event attributes which are not modified, e.g. obfuscated, in a manner which prevents the requester to infer the inbound event attributes. In such exemplary scenario, access to the outgoing event attribute may be denied to the requester, since the requester might not have the access rights as specified in the access policy and the outbound event attribute includes values which might not be obfuscated by the processor component in a manner exceeding the obfuscation threshold.

Advantageously, access the outbound event attributes may be enforced if the requester does not have the access rights as specified by the access policy of the outbound event attribute and the determined obfuscation value does not exceed the obfuscation threshold. Since determining the obfuscation value may add only low latency to the enforcement of the access of the outbound event attribute, a time and resource efficient to deny access to the outbound event attribute may be implemented based on the access rights and the calculated obfuscation threshold of the processing component. Furthermore, privacy of the values of the inbound event attributes may be preserved.

In a further embodiment, the method may further comprise:

wherein the obfuscation value is calculated using a Bayesian network for each processor component,
wherein the Bayesian network comprises nodes and edges corresponding to the nodes and the edges of the dependency graph.

For determining the obfuscation value, a Bayesian network may be used. The structure of the Bayesian network may relate to the structure of the dependency graph. Advantageously, no separate structure may have to be determined for the Bayesian network. Consequently, the computational effort for calculating the Bayesian network may be reduced.

In another embodiment, the method may further comprise:

wherein calculating the obfuscation value comprises calculating a local obfuscation value.

Calculating a local obfuscation value may comprise determining the local obfuscation value using a local Bayesian network of a local host. The local obfuscation value may be calculated for locally deployed processor components. By calculating the local obfuscation value, the complexity of the Bayesian network may be further reduced. Thus, the computational effort for determining the local obfuscation value may be reduced. In addition, the additional latency for determining whether access to the outbound event attribute may be granted to the requester based on the local obfuscation value may be decreased.

## Event producer according to an aspect

According to another aspect, an event producer for enforcing access to outbound event attributes of outbound event streams in a complex event processing system may be provided. The event producer may comprise:

a processor coupled to a memory, the memory comprising:

a processor component adapted to be executable by the processor that when executed by the processor cause the processor to:

- receive a request for an outbound event attribute of a plurality of outbound event attributes of an outbound event stream;
- associate access requirements of an access policy to the corresponding one or more outbound event attributes;
- compare the access requirements of the requested outbound event attribute with access rights of an event consumer; and
- if the access rights of the event consumer fulfil the access requirements of the outbound event attribute:

  - transfer the requested outbound event attribute to the event consumer.

The processor component adapted to be executable by the processor that when executed by the processor may further cause the processor to:

- determine one or more inbound event attributes of one or more inbound event streams, wherein the one or more inbound event attributes of the one or more inbound event streams are processed to produce the one or more outbound event attributes of the outbound event stream;
- determine a dependency graph between the one or more inbound event attributes and the one or more outbound event attributes;
- determine an access policy comprising access requirements of the one or more outbound event attributes, including the step of:

  - inherit, for each inbound event attribute, access requirements associated with each of the inbound event attributes according to dependencies of the dependency graph.

## Event consumer according to an aspect

According to a further aspect, an event consumer may be provided in a complex event processing system. The event consumer may comprise:

a processor coupled to a memory, the memory comprising:

a processor component adapted to be executable by the processor that when executed by the processor cause the processor to:

- transfer, to an event producer, a request for an outbound event attribute of a plurality of outbound event attributes of an outbound event stream;
- if access rights fulfil access requirements of the requested outbound event attribute:

  - receive the requested outbound event attribute as an inbound event attribute from the event producer.

## Computer program product according to an aspect

According to yet another aspect, a computer program product stored on a computer-readable storage medium and/or provided as a data stream and/or a signal may be provided. The computer readable storage medium may comprise computer readable instructions, wherein the instructions when executed by a computer urge the computer to perform operations according to the method as described above.

One or more features of one or more aspects and/or embodiments can be isolated from each other and can be combined to create further aspects and/or embodiments.

## Brief Description of the Figures

**Fig. 1** schematically illustrates access control and event dependency in an exemplary logistics process.

**Fig. 2** schematically illustrates event attributes of a complex event processing (CEP) system in an exemplary shipping scenario of a logistic chain.

**Fig. 3** presents an exemplary dependency graph of a processing component.

**Fig. 4** provides an exemplary Bayesian network comprising the topology of the Bayesian network and the associated conditional probability tables.

**Fig. 5** schematically illustrates single- and multiple-connected correlation networks.

**Fig. 6** presents an exemplary algorithm for local obfuscation calculation.

**Fig. 7** shows exemplary performance measuring results illustrating the influence of the access policy consolidation approach on network usage and latency.

**Figure 8** shows an exemplary system for implementing the claimed subject matter including a general purpose computing device in the form of a conventional computing environment (e.g. a personal computer).

## Detailed Description

In the following text, a detailed description of examples will be given with reference to the drawings. It should be understood that various modifications to the examples may be made. In particular, elements of one example may be combined and used in other examples to form new examples.

In distributed complex event processing, event streams may be processed over a chain of subsequent processor components. For large-scale applications like a logistic chain these processor components may be hosted by different entities and thus may be spread over different security domains, e.g. different computer systems and/or computer networks separate to each other. Current approaches for complex event processing cannot preserve the privacy of a processor component's incoming (or inbound) event streams. An adversary may infer the original input stream from the received event stream. In the following, a fine-grained access control for complex event processing (CEP) is described. It is shown how to enforce privacy of events and/or event attributes throughout the chain of dependent processor components by specifying appropriate access policies and proposing an algorithm for policy consolidation. Furthermore, the calculation of an obfuscation value is described which may allow ignoring access requirements once a sufficient obfuscation level, e.g. an obfuscation value exceeding an obfuscation threshold, may have been achieved. The proposed algorithms may be capable to reduce the overhead when enforcing access policies.

Although access to event attributes may be restricted in complex event processing systems, the provider's business partners can provide their correlated information freely to everyone, even if it is dependent on the original data. This may constitutes a security problem, since it may enable requesters of correlated event attributes to infer the original values of the event attributes.

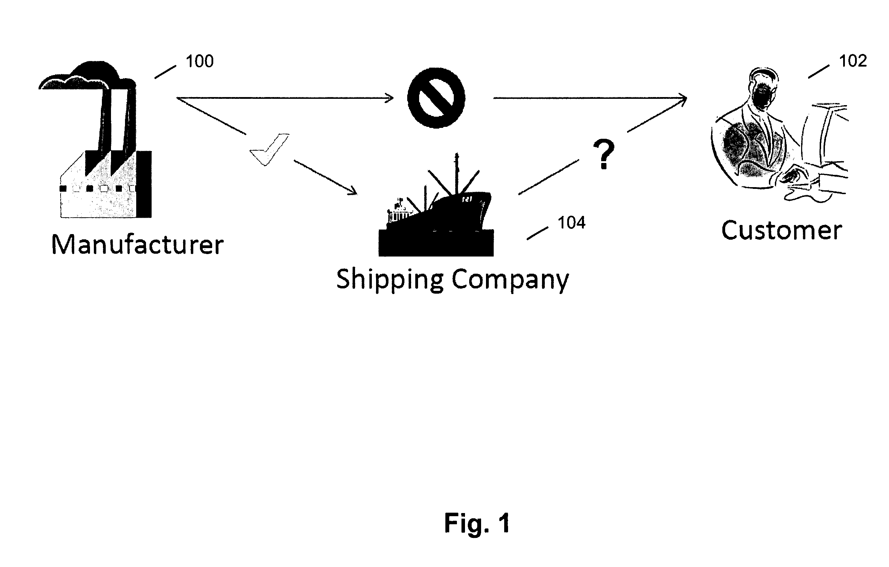

Fig. 1 schematically illustrates access control and event dependency in an exemplary logistics process. In the exemplary logistics process, a manufacturer 100 may want to deliver a item to a destination, e.g. a customer 102, using a shipping company 104. Based on the destination of the customer 102, the shipping company 104 may determine a warehouse close to the destination, where the item of the manufacturer 100 will be shipped to for further delivery to the customer 102. The exchange of the data between the manufacturer 100, the shipping company 104, and the customer 102 may be performed using an event processing system, where processing components may be hosted in the domain, e.g. the security domain, of each party, e.g. the manufacturer 100, the customer 102, and the shipping company 104.

The event processing system and in particular the processing components of the event processing system may communicate via a computer network the relevant data between each of the parties, e.g. the manufacturer 100, the customer 102, and the shipping company 104. For example, the destination of the item is transmitted to the shipping company 104. The shipping company 104 may process the destination of the item by a processing component of the shipping company. The processing component of the shipping company 104 may produce an output event stream which may be transferred and/or streamed to a processing component of the customer 102. By transferring and/or streaming the output event stream from the processing component to the shipping company 104 to the processing component of the customer 102, data related to the destination of the item which has been transferred from the processing component of the manufacturer 100 to the processing component of the shipping company 104 may be transferred from the processing component of the shipping company 104 to the processing component of the customer 102. The customer 102 may receive data via the shipping company 104 which would otherwise not be accessible by the customer. In other words, the customer may receive data from the original event which the manufacturer does not desire. The privacy of the data which is transferred from the manufacturer 100 to the shipping company 104 may be violated by the shipping company 104 transferring the data of the manufacturer and/or processed data based on the data of the manufacturer 100 to the customer 102. Therefore, access control may be required which ensures the privacy of data even over multiple processing steps performed by processing components of the participated parties, e.g. the manufacturer 100, the shipping company 104, and the customer 102. Therefore, an approach is required in which the access policy for the data transferred to the customer from the shipping company, e.g. data related to a warehouse, is influenced by the access policy of data transferred from the manufacturer to the shipping company, e.g. data of the destination of the item being shipped to the customer.

In some cases, it is ensured that in a multi-domain, large scale CEP system, every producer of information, e.g. the manufacturer 100 and/or the shipping company 104, may control the access to its information even over multiple correlation steps. In particular, the approach may comprise an access policy inheritance mechanism to overcome this lack of security. The inheritance may ensure that the privacy of original information may be guaranteed, even if the information is processed through a chain of processing components. Event producers may specify an access policy for the event information they provide. In addition, event producer may also specify when the access policy may be ignored for certain events. For specifying when the access policy may be ignored for certain events, an obfuscation of information during the correlation processes is taken into account. The obfuscation of information may have influence whether access policies need to be respected and/or enforced.

**System Model**

In a complex event processing system, hosts are interconnected via one or more computer networks. Each of the one or more computer networks may relate to a different security domain. On the hosts, processor components may be deployed and executed to collaboratively process one or more event attributes of one or more event streams and to form the distributed complex event processing system. The cooperative behaviour of the processing components may be modelled by a directed graph G = (?, S) which may consist of processing components $w \in$ ? and event streams ($w_i$, $w_j$) $\in S \subseteq$ (? x ?) directed from processing component $w_i$ to $w_j$. A processing component $w_i$ may be called an event producer. A processing component $w_j$ may be called an event consumer. The event producer may produce one or more outbound event attributes of one or more outbound event streams which may be directed, e.g. streamed and/or transferred via a computer network, to the event consumer, e.g. a requester of the one or more outbound event attributes of the one or more outbound event streams. One or more event attribute may be included in an event, e.g. an inbound event or an outbound event. Every processing component w may implement a data processing operation or data processing function $f_w: I_w \to O_w$ that may map inbound or incoming event streams $I_w$ to outbound or outgoing event streams $O_w$. In particular, $f_w$ may identify which events, e.g. which event attribute of the event, of the one or more incoming event streams of the processing component w are processed, how event patterns are identified and/or correlated between those inbound event attributes, and finally how inbound event attributes for the one or more outbound streams of the processing component w are produced.

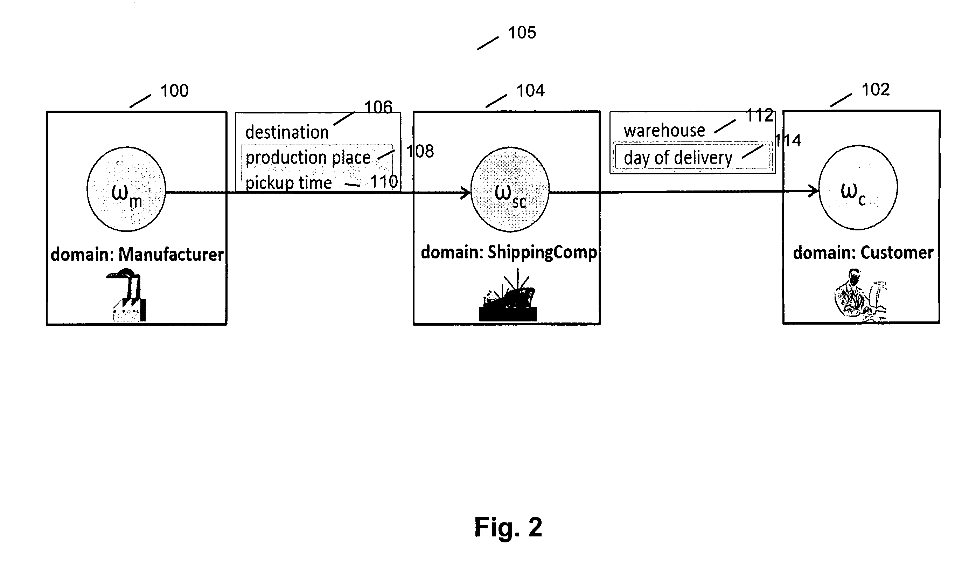

**Fig. 2** schematically illustrates event attributes of a complex event processing (CEP) system 105 in an exemplary shipping scenario of a logistic chain. In the scenario of the logistic chain, the manufacturer 100, the shipping company 104, and the customer 102, each may constitute a domain, e.g. a security domain, and each may be providing at least one processing component in its domain. The processing components may establish event streams as depicted in **Fig. 2.** The manufacturer 100 may want to send an item to one of its customers 102. In some cases, the manufacturer 100 may send one or more event attributes, e.g. outbound event attributes, to the shipping company 104. The one or more outbound event attribute may comprise data about the destination 106 of the item, the production place 108 of the item and the pick-up time 110 indicating when the item is ready for shipping. The shipping company 104 may receive the outbound event attributes of the manufacturer as inbound event attributes and may use the inbound event attributes in the processing component $w_{sc}$. For example, the processing component $w_{sc}$ may correlate the inbound event attributes to create and/or to produce one or more outbound event attributes, e.g. a warehouse 112 event attribute and/or a day of delivery 114 event attribute. The warehouse 112 event attribute may relate to the warehouse where the item may be shipped and the day of delivery 114 event attribute may relate to the date where the customer 102 receives the item.

**Access Control for Complex Event Processing**

The central concept of the present application may relate to inherit access requirements, which may be assigned or associated to event attributes in an access policy, over a chain of event processor components. During every processing of an inbound event attribute by a processor component, the obfuscation of the inbound event attribute may be calculated. Once a certain obfuscation threshold, e.g. a predetermined obfuscation threshold, is reached during the further processing of the inbound event attribute, the event attribute's access requirements may be ignored.

**Access Policies**

The access rights within an access policy AP may be specified for a processing component w as a set of (attribute att, access requirement ar) pairs:

$$AP_w = \{(att_1, ar_1), \ldots, (att_n; ar_n)\}.$$

If there is no access requirement specified for an inbound and/or outbound event attribute, the event attribute att may be accessible freely to any participant in the network. Event attributes which use the same name, but are produced by different processing components are considered to be distinct to each other. An access requirement may be a tuple of a property p, a mathematical operator op and a value set val: ar = (p, op, val), where op $\in \{=,<,>,\leq,\geq,\in\}$ . The value set val may be specified by a range or a set of values. In some cases, access requirements may refer to a domain, e.g. a security domain, and may have the following structure: $ar_1$ = (domain, $\in$ , {domain A; domain B}).

In the exemplary scenario of Fig. 2, the manufacturer's event attributes, e.g. the destination 106, the production place 108, and the pickup time 110, may have different access requirements. While the information about the destination 106 may be accessible by the customer 102, information about where the item is produced, i.e. the production place 108, and when it can be picked up, i.e. the pickup time 110, may be restricted to the shipping company 104. Therefore, the access policy AP associated with the outbound event attributes of the manufacturer 100 may be defined as follows:

$$AP_{manufacturer} =$$
$$\{(destination, (domain, \in ,\{shippingComp, customer\})),$$
$$(pickup\ time, (domain,=,shippingComp)),$$
$$(production\ place, (domain,=,shippingComp))\}.$$

In particular, for receiving access to the outbound event attribute destination of the manufacturer, the domain of a requester may have to be either shippingComp or customer. For receiving access to the outbound event attributes pickup time and production place of the manufacturer, the domain of the requester may have to be shipping company. In other words, a requester is required to be a member of either the domain shippingComp and/or the domain customer for being allowed to receive the outbound event attribute destination of the manufacturer. For example, the requester may have to use an IP address or security token of one of the domains shippingComp and/or customer to receive access to the destination event attribute. If the access policy of the manufacturer is enforced, the consumer 102 may be only eligible to receive an attribute if the access rights, e.g. properties of the access rights, of the consumer 102 may match the access requirements defined for the attribute by the manufacturer 100. If the access rights of the consumer 102 match the access requirements defined for the attribute, the consumer 102 may be trusted to use the attribute in the processing component $w_c$ of the consumer 102.

## Obfuscation of Event Information

While access policies may allow a event producer to specify access requirements in a fine-grained manner for each event attribute, the inheritance of access requirements to subsequent processor components may lead to very restrictive access requirements and may limit the efficiency and applicability of the CEP system: if event attributes are propagated and/or correlated over many steps in a chain of processing components, the number of access requirements may steadily increase and may prevent access to the event attributes by subsequent processing components in the chain of processing components. In the logistics example, the day of delivery 114 may be calculated based on the destination 106, the production place 108 and the pickup time 110. As a consequence, the customer 102 would have no access to the day of delivery 114 of the ordered item, since the customer 102 might not fulfil the access requirements for the production place 108 and the pickup time 110.

The values of the event attributes may become obfuscated during the correlation process. The correlation process may be defined by a chain or sequence of processing components applied to event attributes. Each processing component may correlate inbound event attributes to produce outbound event attributes for a subsequent processing component. Depending on the achieved level of obfuscation, the access requirements of an outbound event attribute might no longer be needed. The level of obfuscation may be a measure, to which extent an event consumer of an outbound event attribute, e.g. day of delivery, may infer the value of the inbound event attribute, e.g. production place. In addition, the obfuscation might not only dependent on the values of the inbound event attributes, but also on the knowledge of the event consumer. For example, if the event consumer has knowledge of the destination, the event consumer may infer the production place since the delivery time of the item may be related to the distance between destination and production place.

In general, the obfuscation between two event attributed may be defined as a function $obf(att_{old}, att_{new}, w_{req})$. The function may return an obfuscation value indicating the achieved obfuscation for a pair of event attributes for a requesting processing component $w_{req}$ of the requester. The pair of event attributes may comprise an inbound event attribute $att_{old}$ and an outbound event attribute $att_{new}$.

Since inbound event attributes may become obfuscated during the correlation process, every processing component may specify with the associated access policy an obfuscation policy. The obfuscation policy may comprise one or more obfuscation thresholds for every outbound event attribute which is produced by the processing component. During the processing of an inbound event attribute, the obfuscation value of the inbound event attribute using the obfuscation function may be determined. Once the obfuscation value exceeds the obfuscation threshold as specified in the obfuscation policy, the access requirements of the inbound event attribute may be ignored. Formally, the obfuscation policy for a processing component w may be defined as a set of attribute - obfuscation threshold (att, ot) pairs: $OP_w = \{(att_1, ot_1), ..., (att_n, ot_n)\}$. For example, the obfuscation policy $OP_{manufacturer} = \{(destination, 0.9)\}$ states, that the obfuscation threshold of 0.9 has to be exceeded for the inbound event attribute destination in order to ignore the access requirements for the inbound event attribute destination.

## Security Goal

Let $att_{old} \to w\ att_{new}$ denote that i) a processor component $w \in ?$ may take the inbound event attribute $att_{old}$ as input of the correlation function $f_w$, and that ii) the correlation function $f_w$ may produce $att_{new}$ in dependence of $att_{old}$. Furthermore, let $att_{old} \to^* att_{new}$ denote the transitive closures of a dependency relation between the inbound event attribute $att_{old}$ and the outbound event attribute $att_{new}$. For any pair of event attributes with $att_{old} \to^* att_{new}$, the outbound event attribute $att_{new}$ may be dependent on the inbound event attribute $att_{old}$. In order to preserve the privacy of the inbound and outbound event attributes over multiple processing components applying one or more correlation functions $f_w$, the dependency relation between the inbound event attributes and the outbound event attributes may have to be preserved and/or considered in the CEP system. In particular, access requirements of the inbound event attributes might not only be applied to the inbound event attributes, but may be inherited to one or all dependent outbound event attributes $att_{new}$ unless a sufficient obfuscation threshold for $att_{new}$ may have been reached.

More formally, given for each inbound event attribute att an initial set of access requirements AR denoted by $AR_{init}(att)$. In some cases, the policy consolidation approach may meet at least one or both of the following two conditions:

**Condition 1:** For all outbound event attributes $att \in O_w$ produced at the processing component w, it is denoted: $AR_{init}(att)\ c\ AP_w$. In other words, the access requirements $AR_{init}$ of the inbound event attributes att may define a subset of the access policy AP of the processing component w.

**Condition 2:** For all dependent attribute pairs $(att_{old}, att_{new}) \in \to^*$ with

    1. $w_i$ has produced $att_{old}$ with access requirement $AR(att_{old})$ and obfuscation threshold $(att_{old}, x) \in OP_{w\_i}$,

2. $att_{new}$ is produced by $w_j$

3. $att_{new}$ is consumed by $w_k$

the access requirement in $AP_{w\_i}$ yield

$$AR(att_{old}) \subset AP_{w\_j} \text{ if } obf(att_{old}, att_{new}, w_k) < x.$$

The policy consolidation approach may need to ensure Condition 1 and Condition 2 in the presence of adversaries who may try to derive values of inbound and/or outbound event attributes which the adversaries are not allowed to access directly due to the access requirements of the access policy. It is assumed that an adversary may execute any processing component of the CEP system. In doing so, the adversary is however limited to the behaviour described in the system model. The adversary may need to be authenticated to the CEP system and may access event streams according to the access rights and/or properties of the adversary. Furthermore, the adversary may derive only outbound event attributes according to the processor component specification and may follow the access requirements for each executed processing component. In other words, the adversary might not modify the CEP system, but may infer from the values of the accessible outbound event attributes possible values of the inbound event attributes. For inferring any additional information without having the required access rights, the adversary may analyse only the outbound event streams and the outbound event attributes, which may be accessible to the adversary.

**Policy Consolidation and Event Obfuscation**

In the following, the concepts to achieve the previously defined security goal, e.g. preserving the privacy of inbound event attributes, are described. To establish an event stream in a CEP system, an event consumer may request an event or an event attribute of an event from an event producer. The event consumer may authenticate towards the producer. Based on the authentication information, the producer may handle the request of the event consumer. The behaviour of the CEP system may, for example, be realised by a publish/subscribe system.

For example, the customer 102 may request the outbound event attribute warehouse 112 from the processing component $w_{sc}$. The processing component $w_{sc}$ may implement a correlation function $f_{sc}$, which may map the inbound event attribute destination 106 to the one or more outbound event attributes including the outbound event attribute warehouse 112. The producer of the event attribute destination 106 may have specified an access policy which requires that a recipient of the destination 106 must be within the domain shippingComp and/or the domain customer. In addition, the producer of the event attribute destination 106 may have specified an obfuscation policy which allows the access requirements of the inbound event attribute destination to be ignored if the obfuscation value is at least 0.9. The processor component $w_{sc}$, which is located in domain shippingComp, might not provide any additional access requirements for the outbound event attribute warehouse 112 and might not provide an obfuscation threshold for the outbound event attribute warehouse 112. However, the outbound event attribute warehouse 112 may have to consider the access policy of the predecessor processor component $w_m$. The consumer 102 may request access to the outbound event attribute warehouse 112. In this scenario, two different cases may have to be considered: first, the consumer 102 may be within the domain shippingComp and/or within the domain customer, and, second, the consumer might not be within the domain shippingComp and/or the domain customer.

In the first case, the consumer 102 may be allowed to access the destination 106. Since there is no additional access requirement for the warehouse 112, the consumer 102 may also be allowed to access the outbound event attribute warehouse 112. Thus, the consumer 102 may receive every outbound event attribute produced by the processing component $w_{sc}$. Furthermore, the consumer 102 may have to ensure access policy inheritance if the consumer 102 may further correlate the inbound event attribute warehouse 112.

In the second case, the consumer 102 might not have access to outbound event attribute warehouse 112 unless the obfuscation value of 0.9 may be achieved. Since the obfuscation value may depend on the values of the outbound event attribute warehouse 112, the obfuscation value may be determined for each instance of the outbound event attribute. Hence, the consumer may only receive a subset of the outbound event attributes including the outbound event attributes produced by the processing component $w_{sc}$. Apart from that, the consumer 102 might have no commitment for access policy inheritance, since the obfuscation threshold is exceed for each outbound event attribute which the consumer 102 receives.

**Access Policy Inheritance**

When defining access policies in a CEP system, event attributes included in the event stream of a producer may be inferred by hosts which do not fulfil the access requirements. The correlation function f of a processor component may map data contained in an inbound event attribute to an outbound event attribute attribute inside a newly produced event. The values of event attributes may be propagated over a chain of processor components using event streams whose access to the values of the event attributes might not be controlled by the original producer of the event attribute.

In order to establish access control in complex event processing networks, it is essential that producers of outbound event attributes may control the access of their own produced attributes and the attributes which depend on them. An inheritance mechanism may be introduced, which inherits access requirements of inbound event attributes to outbound event attributes dependent on them. This may ensure that every producer may have full access control regarding the outbound event attributes, even if the outbound event attributes are used and/or transformed in a subsequent processor component within the CEP system.

Access policy inheritance may consist of two basic conceptual steps: First, the dependencies between the one or more inbound event attributes and the one or more outbound event attributes of a particular processing component may have to be identified. For identifying the dependencies between the one or more inbound event attributes and the one or more outbound event attributes a dependency graph may be determined. Second, some or all access requirements specified for the one or more identified inbound attributes may have to be mapped to their corresponding dependent outbound event attributes in the access policy of the outbound event attributes.

## Creating the Dependency Graph

Since access policies of outbound event attributes may comply with access requirements of inbound event attributes, attribute dependencies between the inbound event attributes and the outbound event attributes may have to be detected. For detecting the attribute dependencies, the correlation function $f_w$ of every processor component w may be analysed, once the processor component is deployed in the system. For each outbound event attribute, the correlation function $f_w$ may be looked up for the inbound event attributes that may be used as input values of the correlation function $f_w$.

In general, all dependencies $att \rightarrow^* att_{new}$ for every outbound event attribute may be modelled in a dependency graph. From the dependency graph, it may be determined which access requirements may need to be inherited and how multiple access requirements may need to be merged for the outbound event attributes.

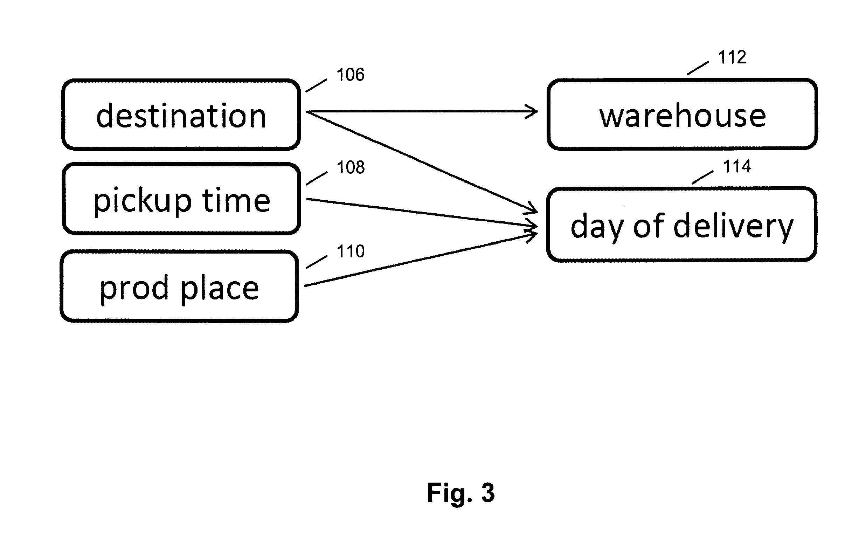

**Fig. 3** presents an exemplary dependency graph of a processing component. In particular, the warehouse 112 is determined based on the destination 106 of the item. Thus, the outbound event attribute warehouse 112 may be dependent from the inbound event attribute destination 106. The day of delivery of the item may be correlated based on the destination 106, the production place 110, and the pickup time 108. Thus, the outbound event attribute day of delivery 114 may be dependent from the inbound event attributes destination 106, pickup time 108, and production place 110.

## Creating the new Access Policies

In accordance with the dependency graph, a policy consolidation approach may be initiated, which may determine the new access policy based on the received access requirements of some or all dependent inbound event attributes. This means that the access requirements may be included in the newly generated access policy. The policy consolidation approach may assign or associate the access requirements from some or all inbound event attributes $att \in att \rightarrow^* att_{new}$ to the outbound event attribute $att_{new}$. Finally, the new access policy may be merged, i.e. optimized.

Consolidating the access policies may cause that new access policies steadily grow in size, since the access requirements of preceding processor components may be integrated. However, a new access policy may include inbound event attributes with multiple associated access requirements, which may unnecessarily increase the AP's size. Hence, access requirements associated to the same attribute may be merged and unnecessary access requirements may be eliminated, e.g. removed, from the access policy. In the exemplary scenario of **Fig. 3,** the processor operator which may determine the warehouse 112 may need to map the access requirement

$$(\text{domain}, \in, \{\text{shippingCompany}, \text{customer}\})$$

which may be associated to the destination 106 in $AP_{manufacturer}$ to the warehouse 112, since the warehouse 112 may be dependent on the destination 106. Hence, only processor components hosted by the shipping company 104 and/or the customer 102 may be allowed to access the outbound event attribute warehouse 112. After creating the new access policy for the processor component of the shipping company 104, the access policy may include the following entries:

$$AP_{shippingCompany} =$$
$$\{(warehouse, (domain, \in, \{shippingComp, customer\})),$$
$$(day\ of\ delivery, (domain, =, shippingComp)),$$
$$(day\ of\ delivery, (domain, =, shippingComp)),$$
$$(day\ of\ delivery, (domain, \in, \{shippingComp, customer\}))\}$$

When the access restrictions referring to the same attributes, e.g. day of delivery, may be merged, the following access policy may result from merging the access restrictions:

$$AP_{shippingCompany} =$$
$$\{(warehouse, (domain, \in, \{shippingComp, customer\})),$$
$$(day\ of\ delivery, (domain, =, shippingComp))\}$$

**Obfuscation Model**

If a consumer does not fulfil the access requirements, the consumer may still get access to an event attribute. As defined in the security goal, it may have to be checked whether a specified obfuscation threshold may be reached. In order to determine whether the specified obfuscation threshold may be reached, the input and the output of the correlation function and the knowledge of the consumer may be taken in to account to analyse how likely it is that the consumer may infer on the one or more inbound event attributes. In some cases, the obfuscation is typically dependent on the correlation function, i.e. how the correlation function creates outbound event attributes based on the inbound event attributes.

In some cases, a CEP system may provide a filter processing component and an aggregator processing component. The correlation function of the filter processing component may check for every inbound event attribute whether one or more inbound event attributes may have a specific value and/or may be within a certain value range. If the inbound event attributes fulfil a condition of the filter processing component, the inbound event attributes are forwarded to a requester, e.g. all requesters, of the filter processing component. Since the values of the inbound event attributes may match the values of the outbound event attributes when using the filter processing component, no obfuscation of inbound event information may be performed by the filter processing component. For every received outbound event attribute, the requester may directly infer the values of the inbound event attributes.

The aggregator processing component may collect some values of inbound event attributed before producing outbound event attributes. For example, the aggregator processing component may combine one or more values of the inbound event attributes in a certain time window and/or for a specific number of inbound events before determining a new value of an outbound event attribute. When aggregating values of the inbound event attribute to produce values of the outbound event attributes, the values of the inbound event attributes may become obfuscated during the aggregation. The requester of the aggregated output event attributes might not directly infer the values of the inbound event attributes. Depending on the correlation function, e.g. aggregation function, the requester may only have the possibility to guess that some values of the inbound event attributes may be more likely than other values of the inbound event attributes.

Furthermore, the knowledge of the requester may play an important role in event obfuscation. If an outbound event attribute is correlated based on two or more inbound event attributes, knowledge about values of one of these inbound event attribute may be used by a consumer when trying to infer the another inbound event attribute. The knowledge of the consumer may be defined as a function $known_{w\_r}(I_w)$, which may return a set of inbound event attributes from $I_w$ known to the recipient $w_r$, i.e. $known_{w\_r}(I_w) \subset I_w$.

**Semantics of Obfuscation**

When determining the obfuscation, it is assumed that a requester of an outbound event attribute may have knowledge about i) the semantics of a correlation function producing $att_{out}$ and ii) the possible values of the unknown inbound event attributes from which $att_{out}$ may be dependent. Based on these assumptions, the obfuscation of an unknown inbound event attribute may be specified as the equality of likelihood of the different values which the unknown inbound event attribute might have. The inbound event attribute may be perfectly obfuscated, if an event consumer might not make any conclusions on the correct value of the inbound event attribute based on the consumer's knowledge. In other words, the obfuscation may be perfect, if the probability for all possible values of the inbound event attribute is equal, i.e. the recipient might not infer on a value because the value was more likely to have occurred. If there is only a single possible value for the inbound event attribute and the user can directly infer on that value, the obfuscation may be 0.

**Formalizing Obfuscation**

The inference of an inbound event attribute based on an outbound event attribute may be defined as a probability value. In some cases, the inference probability is known as the Bayesian inference and provides an answer to the following question: Given a certain outbound event attribute and a particular set of inbound event attributes known to the event consumer, how likely is a specific value for an inbound event attribute? As previously defined, the obfuscation may be perfect, if the probability for all possible values of the incoming attribute is equal, i.e. the recipient might not infer on a value because the value was more likely to have occurred. In this case, the entropy of the distribution may be 1. Consequently, if there is only a single possible value for the incoming attribute, and the user can directly infer on that value, the entropy. Therefore, the achieved obfuscation may be 0.

In particular, it is defined that $I^*(att_{new})$ is the set of $att_{old}$ for which $att_{old} \rightarrow^* att_{new}$. The inference probability ip of an attribute $att_{old} \in I^*(att_{new})$ used to correlate $att_{new}$ for a requester $w_r$ may be the conditional probability distribution of $att_{old}$:

$$ip(att_{old}, att_{new}, w_r) = P(att_{old} \mid known_{w\_r}(I^*(att_{new}) \setminus I^*(att_{old})), att_{new})).$$

As specified above, the inference probability ip might not be a single probability value, but a probability distribution over the values of the inferred inbound event attribute $att_{old}$. Furthermore, the inference probability ip might not only be dependent on the processor component w, but also on the knowledge of the recipient.

Based on the inference probability, the obfuscation value of the inbound event attribute $att_{old}$ may be determined with respect to the outbound event attribute $att_{new}$ by calculating the entropy of the inference probability distribution:

$$obf(att_{old}, att_{new}, w_r) = H(ip(att_{old}, att_{new}, w_r)).$$

Preferably, the entropy H may be used for determining the obfuscation value.

If the probability for all possible values of the inbound event attribute is equal, the entropy of the inference probability distribution and thus the obfuscation value may be 1. If there is only a single possible value for the inbound event attribute, the entropy and thus the obfuscation value is 0.

**Measuring Obfuscation**

In order to determine an obfuscation value between an inbound event attribute and an outbound event attribute, a Bayesian network may be used. In some cases, the Bayesian network needs to be trained before the Bayesian network may be queried. Training the Bayesian network may be done in two phases: structure learning and parameter learning. While parameter learning may be carried out by observing events and/or event attributes of a processing component, structure learning may try to find the optimal network structure of the observed events and/or event attributes, which may be an NP-hard problem. In the present approach, the structure learning phase may be skipped, since the structure of the Bayesian network may be determined based on the structure of the dependency graph. In particular, every event attribute may represent a variable, i.e. a node, in the Bayesian network and every dependency between the inbound and outbound event attributes may represent an edge. Therefore, the Bayesian network may be computationally efficient determined which may reduce the latency for determining access to an outbound event attribute.

In addition, every Bayesian network associates a probability function with an inbound and outbound event attribute. The probability distributions may be determined during the parameter learning phase. By analyzing processed events and/or event attributes, the Bayesian Network may learn about the probability distribution of inbound and outbound attribute values. More particularly, the training algorithm may check which particular inbound event attributes may be used for producing the outbound event attribute. Based on these observations, probability tables may be determined for every inbound and outbound event attribute.

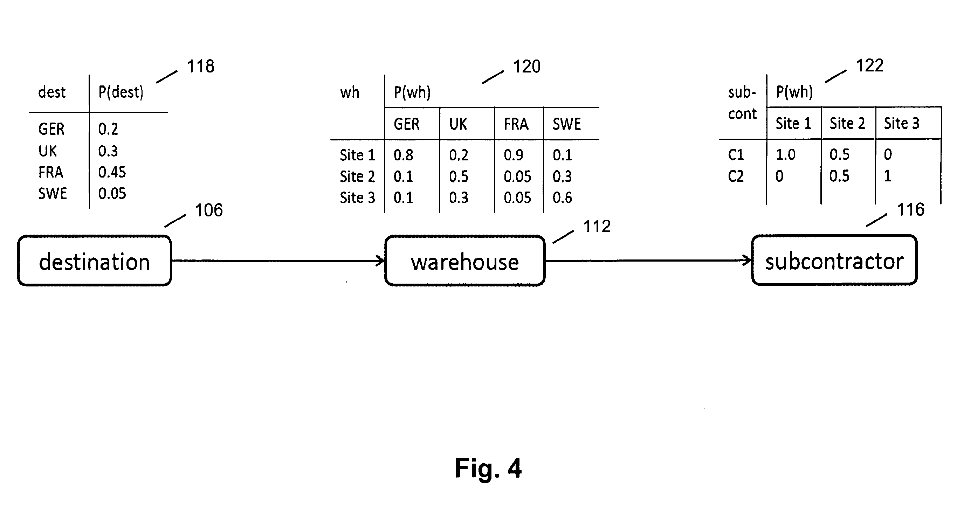

**Fig. 4** provides an exemplary Bayesian network comprising the topology of the Bayesian network and the associated conditional probability tables. In particular, the topology of the Bayesian network may comprise a destination 106, a warehouse 112, and a subcontractor 116, each corresponding to event attributes of the CEP system. The destination 106 may be connected with a directed edge to the warehouse 112 wherein the directed edge may indicate that the inbound event attribute destination 106 may be used to determine the outbound event attribute warehouse 112. Analogously, the directed edge between the warehouse 112 and the subcontractor 116 may indicate that the inbound event attribute warehouse 112 may be used to determine the outbound event attribute subcontractor 116.

In addition, Fig. 4 presents exemplary conditional probability tables associated with each of the nodes destination 106, warehouse 112, and subcontractor 116. The destination table 118 may be associated with the destination node 106 and may comprise four destinations, e.g. GER, UK, FRA, and SWE, and the corresponding probabilities. For example, the probability 0.2 for the destination GER may indicate that 20% of the values of the inbound event attribute destination may have the GER value. The warehouse table 120 may be associated with the warehouse node 120. The warehouse table 120 may comprise three different values, e.g. Site 1, Site 2, and Site 3, of the outbound event attribute warehouse 112. As indicated in the warehouse table 120, the probability of the values Site 1, Site 2, and Site 3 may depend on the value of the inbound event attribute destination. For example, if the value of the destination is UK, Site 2 may be the value of the warehouse with a probability of 0.5. Further, the subcontractor table 112 may be associated with the subcontractor node 116. Similar to the warehouse table 120, the subcontractor table 122 may include the probability of the values of the outbound event attribute subcontractor 116 which may depend on the values of the inbound event attribute warehouse 112.

Once the Bayesian network is trained, the Bayesian network may be queried about the inference probability of certain inbound and outbound event attributes. Querying means to provide information about some known outbound event attributes and to calculate the conditional probability distribution of the unknown inbound event attributes. For example, by providing information about the observed value of the outbound event attribute, the probability distribution of the values of the outbound event attribute may be queried which may have led to the observed value of outbound event attribute. In particular, the inference probability $ip(att_{old}, att_{new}, w_r)$ may be queried by providing the Bayesian network with the observed value for $known_{w\_r}$ ($I^*_w$) and $att_{new}$.

## Scalable Access Policy Consolidation

Since calculating the inference probability is an NP-hard problem, additional latency may be added the event processing in the CEP system when using Bayesian networks. In particular, if the size of the Bayesian network is large, the computational effort for querying the Bayesian network may be large. In order to reduce the large computational effort for calculating the Bayesian inference, the Bayesian network may be divided in multiple parts which may be determined independently from each other.

Instead of accounting for a global Bayesian network, local knowledge available at each host may be exploited. This may allow a reduction of the number of relations between inbound event attributes and outbound event attributes. By reducing the number of relations, the processing overhead for calculating the Bayesian inference may be reduced. In order to reduce the number of relations, each host in the CEP network may determine a local Bayesian network for each of the processor components which are deployed on the respective host. In addition, the obfuscation value is determined based on the locally achieved obfuscation between the inbound event attributes and the outbound event attributed of a locally deployed processor component. By using a local Bayesian network, the computational effort may be significantly reduced and thus the additional latency for determining the obfuscation value decreased.

## Determining Local Obfuscation

In some cases, every host calculates the obfuscation value only for the locally known attribute dependencies, i.e. $att_{old} \rightarrow_w att_{new}$, in contrast to calculating the obfuscation value for every pair of dependent event attributes, i.e. $att_{old} \rightarrow^* att_{new}$. Locally calculating the obfuscation value may have the following benefits:

  i) a smaller dependency graph,
  ii) less communication overhead, and
  iii) no multiple-connected correlation networks since only paths with length 1 may exist.

As a consequence, every host may create a local dependency graph on its own instead of creating a global dependency graph for all dependent attributes. Furthermore, the exact inference probabilities may be efficiently calculated to efficiently determine the obfuscation value.

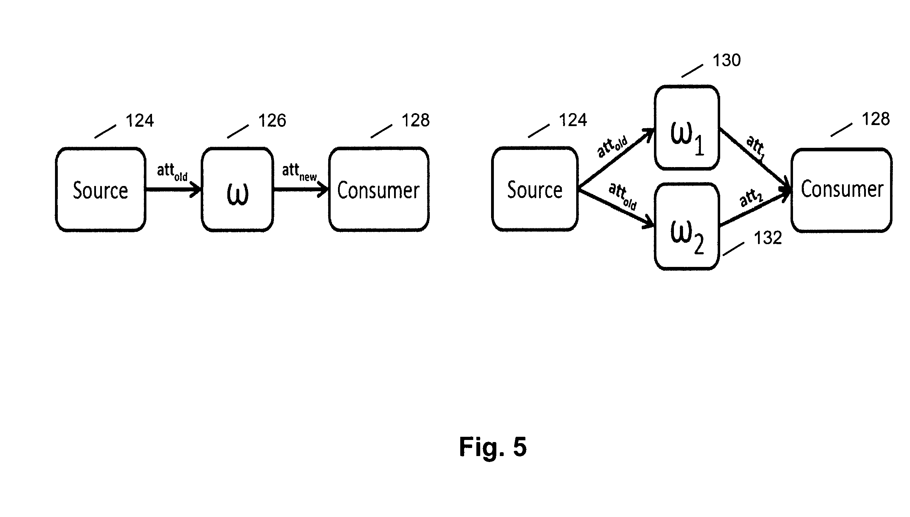

**Fig. 5** schematically illustrates single- and multiple-connected correlation networks. In a single-connected correlation network, a source 124, i.e. an event producer, may provide event attributes $att_{old}$ for a single processor component 126. The single processor component 126 may produce the outbound event attribute $att_{new}$ which may be transferred to an event consumer 128. In contrast to the single connected correlation network, the multiple-connected correlation network may comprise more than one processor component. As depicted in Fig. 5, a first processor component $w_1$ 130 and a second processor component $w_2$ 132 may be available in the multiple-connected correlation network. Both, the first and the second processor components 130, 132 may receive the same inbound event attributes $att_{old}$ from the source 124 and transfer the outbound attributes $att_1$ and $att_2$ to the same event consumer 128.

If both, the first processor component 130 and the second processor component 132 may be deployed on the same local host, multi-path dependencies may have to be considered in a local approach to calculate the obfuscation value. Inbound event attributes might reach the requester via multiple paths, i.e. parallel chains of processor components in a multiple-connected correlation network as depicted in Figure 5, so that the privacy of the inbound event attributes may be violated. An adversary that can subscribe to inbound event attributes over multiple paths may be able to infer the original value by combining the values of the inbound event attributes received through the multiple paths.

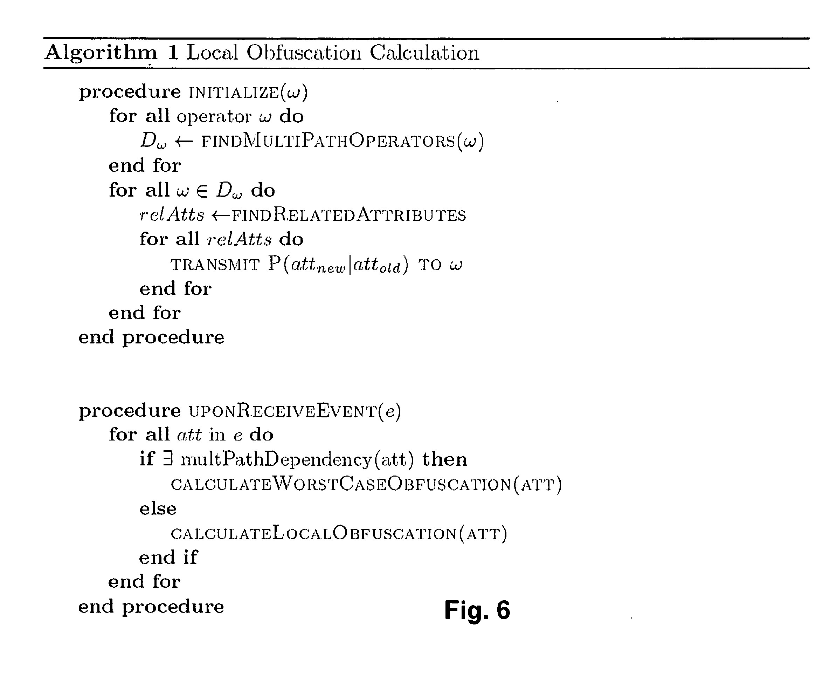

**Fig. 6** presents an exemplary algorithm for local obfuscation calculation. In the initialization phase of the algorithm, multi-path dependencies between all possible attribute pairs may be detected by analysing the entire graph of processor components. For every attribute pair with multi-path dependencies, the processing components, which may reside on distinct paths, exchange the dependency functions with respect to the attributes. In the exemplary scenario of Fig. 5, the inference probability may calculated as follows:

$$P(att_{old}|att1, att2) = \alpha * P(att_{old}) * P(att_1|att_{old}) * P(att_2|att_{old})$$

where $\alpha$ is the normalisation constant $1/P(att_2)$.

Hence, $P(att_1|att_{old})$ may be sent to processing component $w_2$ and $P(att_2|att_{old})$ may be sent to processing component $w_1$.

After performing the initialization, each processor component may calculate the obfuscation value from local knowledge only. In the above example, if processor component $w_1$ calculates the obfuscation value of an inbound event attribute $att_{old}$ for the outbound event attribute $att_1$, the processor component may use the dependency graph and the received inference probability of the other processor component which may have been received during the initialisation phase. Then, the processor component may determine the inference probability of the outbound event attribute $att_2$. Further, the processor component may select the probability which may result in the minimal achievable obfuscation value.

The initialisation may need to be performed with each change of the dependency graph followed by the learning phase of the Bayesian network. Since changes to the dependency graph may occur only when changing the business logic of the CEP system, changes of the dependency graph may be infrequent. Therefore, the computational effort of the initialisation of the algorithm may only occur once in case the dependency graph may change.

**Evaluation**

The previously described access policy approach may be implemented within a distributed heterogeneous event processing (DHEP) framework as described in the research paper of Schilling et al., Distributed Heterogeneous Event Processing - Enhancing Scalability and Interoperability of CEP in an Industrial Context, Proceedings of the 4th ACM International Conference on Distributed Even-Based Systems (DEBS), Cambridge, United Kingdom, July 12-15, 2010. The DHEP framework may enable complex event processing in a heterogeneous environment. This means, hosts may be spread among different security domains and may have differing processing capabilities or use different processing components, e.g. different correlation engines. Hence, using the framework may allow creating multi-domain distributed CEP networks.

To achieve policy consolidation, every processing component which receives a request may provide the requester with the access policy and/or the obfuscation policy associated with the one or more requested outbound event attributes. The access policy and/or the obfuscation policy may be required for further processing of the requested outbound event attributes as inbound event attributes in a subsequent processing component of the requester. The access policy and/or the obfuscation policy may be different depending on the event consumer, e.g. depending on the access rights of the event consumer and/or depending on the processing components the event consumer intends to apply to the inbound event attributes. The outbound event attributes which the event consumer receives as inbound event attributes and their adherence to access policy inheritance may be dependent on whether the event consumer fulfils the access requirements. To realize the determination of the obfuscation value, the Waikato Environment for Knowledge Analysis (WEKA) framework may be used. The WEKA framework is a data mining tool which provides with a Bayesian network implementation. Furthermore, the WEKA framework may allow adding hidden variables which may be needed to compute multi-path inference as discussed previously. Hidden variables may comprise variables which might not be identified by a local dependency graph and, thus, not taken into account when determining a local obfuscation value. Information regarding the hidden values may be added as probability tables to a local dependency graph as depicted in Fig. 4. Every host in the DHEP framework may run its own instance of the WEKA framework. For every outbound event attribute, the obfuscation value may be determined. Depending on the determined obfuscation value and the obfuscation threshold, the outbound event attribute may be transferred to the requester/event consumer.

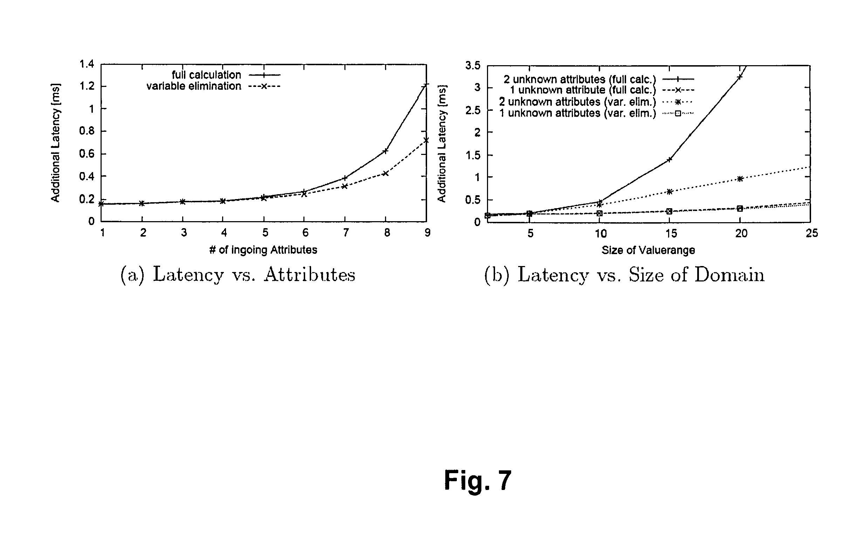

**Fig. 7** shows exemplary performance measuring results illustrating the influence of the access policy consolidation approach on network usage and latency. In some cases, access policy consolidation may cause a reduction of network usage since only a subset of all outbound event attributes may be allowed to transfer to a processing component of the requester. The reduction of network usage may be depending on the application characteristics and, in particular, may be depending on the access rights of the processing components and/or the requester. The reduction of network usage may be further depending on the frequency of distribution of the outbound event attributes.

In addition, the computational effort for the policy consolidation approach may be reduced by considering local obfuscation. The computational effort may be mainly depending on the size of the Bayesian Network and the number of consumers, since different consumers may have differing obfuscation values. In the following, the latency of the policy consolidation approach will be evaluated dependent on the number of inbound event attributes and the number of attribute values. For the evaluations, a simple setup may be used, where one processing component receives inbound events including one inbound event attribute. For the evaluations, the size of the value range of the inbound event attributes and the number of inbound event attributes may vary. The processing component may be hosted on a machine with a 2GHz CPU and 3GB main memory, where the WEKA framework is deployed. The inbound event attributes may be processed by an ESPER correlation engine which may create a single output event attribute, once inbound events from all sources are received. For a created outbound event attribute, the obfuscation value for an event consumer may be determined. In order to have results independent of the processing time of the ESPER correlation engine, only the time required for determining the inference in the Bayesian Network is taken into account, since the time required for determining the inference in the Bayesian network may be the main source for latency caused by the policy consolidation approach.

In particular, Fig. 7(a) depicts the additional latency depending on the number of inbound event attributes. The number of inbound event attributes may have direct influence on the size of the locally determined dependency graph and on the size of the Bayesian Network. It is assumed that no inbound event attribute may be known to the event consumer. The size of the value range of the inbound event attributes is fixed to two values. This means that every inbound event attribute is a Boolean value. As shown in Fig. 7(a) the computational effort may be low for CEP systems with a small number of inbound event attributes. The latency may significantly increase if the total number of inbound event attributes is larger than 7 inbound event attributes. Since the number of inbound event attributes is usually low, e.g. less than 7 inbound event attributes, the policy consolidation approach may add only around 0.2 ms additional latency to the processing of inbound event attributes in a CEP system. Therefore, the policy consolidation mechanism may be computationally efficient approach for CEP systems. For example, security-related event systems usually require a processing time of more than one millisecond per inbound event attribute. Therefore, an additional latency up to 1 ms may be considered to be acceptable for the policy consolidation approach in CEP systems.

As shown in Fig. 7(b), the number of inbound event attributes is fixed to two inbound event attributes, but the value range of each of the inbound event attributes may increased up to 25 values for each of the inbound event attributes. In addition, the obfuscation value is determined for two different event consumers. The first event consumer may have no knowledge about any inbound event attribute, while the second event consumer may have knowledge about at least one inbound event attribute. The standard calculation may add a significant amount of additional latency to the processing time of the processor component if the value range of the attributes increases. If the number of variables may be eliminated, the computational effort may be reduced. Eliminating variables refers to a known algorithm which stores frequently used intermediate results. By storing frequently used intermediate results, the intermediate results might not be computed each time and the computational effort may be significantly reduced. Further, the additional processing time may be dependent from the number of known inbound event attributes in the dependency graph and the number of potential values each of the unknown event attributes.

The presented approach may allow the inheritance of access requirements, when events are correlated to complex events in a complex event processing system. The approach may take into account the obfuscation of values of inbound event attributes. The approach may be based on Bayesian network. In order to reduce the computational effort of calculating the obfuscation value and thus the additional latency for determining the obfuscation value, a Bayesian network may be provided at each local host on which processor components may be deployed.

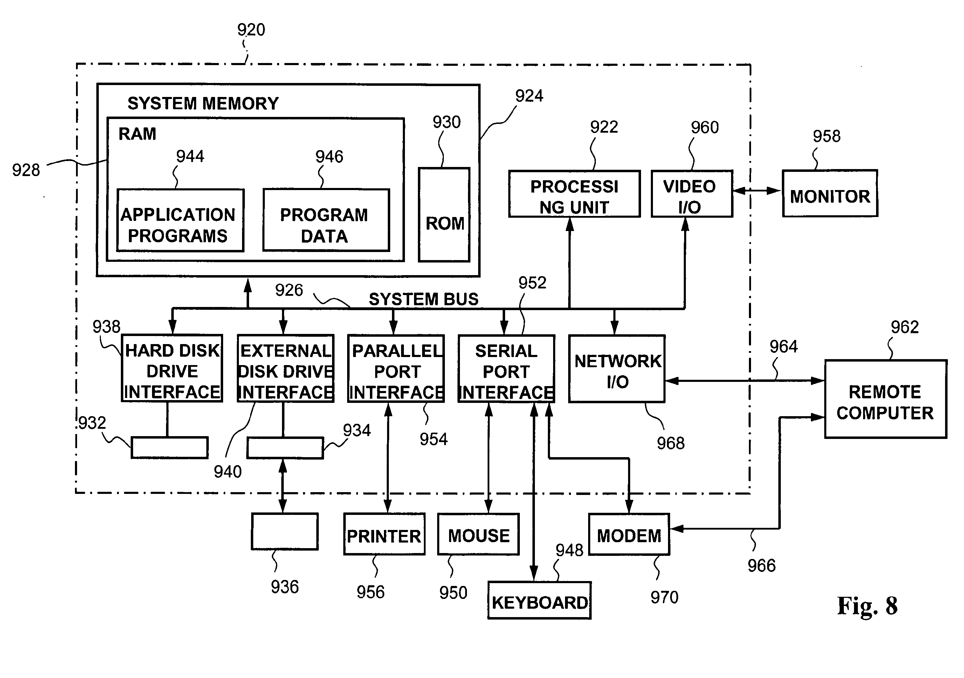

**Fig. 8** shows an exemplary system for implementing the claimed subject matter including a general purpose computing device in the form of a conventional computing environment 920 (e.g. a personal computer). The conventional computing environment includes a processing unit 922, a system memory 924, and a system bus 926. The system bus couples various system components including the system memory 924 to the processing unit 922. The processing unit 922 may perform arithmetic, logic and/or control operations by accessing the system memory 924. The system memory 924 may store information and/or instructions for use in combination with the processing unit 922. The system memory 924 may include volatile and nonvolatile memory, such as a random access memory (RAM) 928 and a read only memory (ROM) 930. A basic input/output system (BIOS) containing the basic routines that helps to transfer information between elements within the personal computer 920, such as during start-up, may be stored in the ROM 930. The system bus 926 may be any of several types of bus structures including a memory bus or memory controller, a peripheral bus, and a local bus using any of a variety of bus architectures.

The personal computer 920 may further include a hard disk drive 932 for reading from and writing to a hard disk (not shown), and an external disk drive 934 for reading from or writing to a removable disk 936. The removable disk may be a magnetic disk for a magnetic disk driver or an optical disk such as a CD ROM for an optical disk drive. The hard disk drive 932 and the external disk drive 934 are connected to the system bus 926 by a hard disk drive interface 938 and an external disk drive interface 940, respectively. The drives and their associated computer-readable media provide nonvolatile storage of computer readable instructions, data structures, program modules and other data for the personal computer 920. The data structures may include relevant data for the implementation of the method for enforcing access to event attributes of event streams in a complex event processing system, as described above. The relevant data may be organized in a database, for example a relational or object database.

Although the exemplary environment described herein employs a hard disk (not shown) and an external disk 936, it should be appreciated by those skilled in the art that other types of computer readable media which can store data that is accessible by a computer, such as magnetic cassettes, flash memory cards, digital video disks, random access memories, read only memories, and the like, may also be used in the exemplary operating environment.

A number of program modules may be stored on the hard disk, external disk 936, ROM 930 or RAM 928, including an operating system (not shown), one or more application programs 944, other program modules (not shown), and program data 946. The application programs may include at least a part of the functionality as depicted in Figs. 1 to 8.

A user may enter commands and information, as discussed below, into the personal computer 920 through input devices such as keyboard 948 and mouse 950. Other input devices (not shown) may include a microphone (or other sensors), joystick, game pad, scanner, or the like. These and other input devices may be connected to the processing unit 922 through a serial port interface 952 that is coupled to the system bus 926, or may be collected by other interfaces, such as a parallel port interface 954, game port or a universal serial bus (USB). Further, information may be printed using printer 956. The printer 956, and other parallel input/output devices may be connected to the processing unit 922 through parallel port interface 954. A monitor 958 or other type of display device is also connected to the system bus 926 via an interface, such as a video input/output 960. In addition to the monitor, computing environment 920 may include other peripheral output devices (not shown), such as speakers or other audible output.

The computing environment 920 may communicate with other electronic devices such as a computer, telephone (wired or wireless), personal digital assistant, television, or the like. To communicate, the computer environment 920 may operate in a networked environment using connections to one or more electronic devices. **Fig. 8** depicts the computer environment networked with remote computer 962. The remote computer 962 may be another computing environment such as a server, a router, a network PC, a peer device or other common network node, and may include many or all of the elements described above relative to the computing environment 920. The logical connections depicted in Fig. 8 include a local area network (LAN) 964 and a wide area network (WAN) 966. Such networking environments are commonplace in offices, enterprise-wide computer networks, intranets and the Internet and may particularly be encrypted.

When used in a LAN networking environment, the computing environment 920 may be connected to the LAN 964 through a network I/O 968. When used in a WAN networking environment, the computing environment 920 may include a modem 970 or other means for establishing communications over the WAN 966. The modem 970, which may be internal or external to computing environment 920, is connected to the system bus 926 via the serial port interface 952. In a networked environment, program modules depicted relative to the computing environment 920, or portions thereof, may be stored in a remote memory storage device resident on or accessible to remote computer 962. Furthermore other data relevant to the complex event processing system (described above) may be resident on or accessible via the remote computer 962. It will be appreciated that the network connections shown are exemplary and other means of establishing a communications link between the electronic devices may be used.

The above-described computing system is only one example of the type of computing system that may be used to implement the method for enforcing access to event attributes of event streams in a complex event processing system.

**List of Reference Numerals**

100    manufacturer

| 102 | customer |
| 104 | shipping company |
| 105 | complex event processing system |
| 106 | destination |
| 108 | production place |
| 110 | pick-up time |
| 112 | warehouse |
| 114 | day of delivery |
| 116 | subcontractor |
| 118 | destination table |
| 120 | warehouse table |
| 122 | subcontractor table |
| 124 | source |
| 126 | processor component |
| 128 | event consumer |
| 130 | first processor component |
| 132 | second processor component |
| 920 | conventional computing environment |
| 922 | processing unit |
| 924 | system memory |
| 926 | system bus |
| 928 | random access memory (RAM) |
| 930 | read only memory (ROM) |
| 932 | hard disk drive |
| 934 | external disk drive |
| 936 | removable disk |
| 938 | hard disk drive interface |
| 940 | external disk drive interface |
| 944 | one or more application programs |

946    program data

948    keyboard

950    mouse

952    serial port interface

954    parallel port interface

956    printer

958    monitor

960    video input/output

962    remote computer

964    local area network (LAN)

966    wide area network (WAN)

968    network I/O

970    a modem

**Claims**

1. Computer-implemented method for enforcing access to event attributes of event streams in a complex event processing system, the method comprising:

   - receiving, by a requester, a request for an outbound event attribute of a plurality of outbound event attributes of an outbound event stream;
   - determining a processor component of a plurality of processor components, the processor component producing one or more outbound event attributes of the outbound event stream;
   - determining one or more inbound event attributes of one or more inbound event streams, wherein the one or more inbound event attributes of the one or more inbound event streams are processed by the processor component to produce the one or more outbound event attributes of the outbound event stream;
   - determining a dependency graph between the one or more inbound event attributes of the processor component and the one or more outbound event attributes of the processor component;
   - determining an access policy comprising access requirements of the one or more outbound event attributes, including the step of:

      - inheriting, for each inbound event attribute, access requirements associated with each of the inbound event attributes according to dependencies of the dependency graph;

   - associating the access requirements of the determined access policy to the corresponding one or more outbound event attributes;
   - comparing the access requirements of the requested outbound event attribute with access rights of the requester; and
   - if the access rights of the requester fulfil the access requirements of the requested outbound event attribute:

      - allowing to transfer the requested outbound event attribute to the requester.

2. Method according to claim 1, wherein inheriting the access requirements comprises adding the access requirements associated with each of the inbound event attributes processed by the processor component to the access policy of the one or more outbound event attributes.

**3.** Method according to any one of the preceding claims, the method further comprising:

merging duplicate access requirements of the access requirements added to the access policy of the one or more outbound event attributes.

**4.** Method according to any one of the preceding claims, wherein an obfuscation threshold is associated with each of the inbound event attributes, wherein an obfuscation policy comprises one or more obfuscation thresholds of the one or more inbound event attributes.

**5.** Method according to any one of the preceding claims, wherein the processor component comprises a correlation function applicable to the one or more inbound event attributes of the one or more inbound event streams, wherein the correlation function correlates the inbound event attributes to produce the outbound event attributes.

**6.** Method according to any one of the preceding claims, wherein the one or more inbound event attributes of the one or more inbound event streams comprise event attributes produced by at least one of one or more sensors and one or more application components.

**7.** Method according to any one of the preceding claims, wherein each node of the dependency graph represents either an inbound event attribute or an outbound event attribute, wherein each edge of the dependency graph represents a dependency between one of the inbound event attributes and one of the outbound event attributes.

**8.** Method according to any one of the preceding claims, the method further comprising:

if the access rights of the requester do not fulfil the access requirements of the requested outbound event attribute:

- calculating an obfuscation value between each pair of inbound and outbound event attributes of the processor component;
- identify the obfuscation threshold of the obfuscation policy associated with each of the one or more inbound event attributes.

**9.** Method according to claim 8, the method further comprising:

if the obfuscation value is greater or equal than the obfuscation threshold:

ignoring the access policy of the outbound event attribute;
allowing to transfer the outbound event attribute to the requester.

**10.** Method according to any one of claims 8 to 9, the method further comprising:

if the obfuscation value is less than the obfuscation threshold:

denying access to the outbound event attribute.

**11.** Method according to any one of claims 8 to 10, wherein the obfuscation value is calculated using a Bayesian network for each processor component, wherein the Bayesian network comprises nodes and edges corresponding to the nodes and the edges of the dependency graph.

**12.** Method according to any one of claims 8 to 11, wherein calculating the obfuscation value comprises calculating a local obfuscation value.

**13.** Event producer, comprising:

a processor coupled to a memory, the memory comprising:

a processor component adapted to be executable by the processor that when executed by the processor cause the processor to:

- receive a request for an outbound event attribute of a plurality of outbound event attributes of an outbound event stream;
- associate access requirements of an access policy to the corresponding one or more outbound event attributes;
- compare the access requirements of the requested outbound event attribute with access rights of an event consumer; and
- if the access rights of the event consumer fulfil the access requirements of the outbound event attribute:

- transfer the requested outbound event attribute to the event consumer.

14. Event consumer, comprising:

a processor coupled to a memory, the memory comprising:

a processor component adapted to be executable by the processor that when executed by the processor cause the processor to:

- transfer, to an event producer, a request for an outbound event attribute of a plurality of outbound event attributes of an outbound event stream;
- if access rights fulfil access requirements of the requested outbound event attribute:

- receive the requested outbound event attribute as an inbound event attribute from the event producer.

15. Computer program product, stored on a computer-readable storage medium or provided as a data stream or signal, the computer readable storage medium comprising computer readable instructions, wherein the instructions when executed by a computer urge the computer to perform operations according to the method of any one of claims 1 to 12.

100

102

Manufacturer

Shipping Company

104

Customer

**Fig. 1**

Fig. 2

**Fig. 3**

EP 2 736 002 A1

118

| dest | P(dest) |
|------|---------|
| GER | 0.2 |
| UK | 0.3 |
| FRA | 0.45 |
| SWE | 0.05 |

120

| wh | P(wh) | | | |
|--------|------|------|------|------|
| | GER | UK | FRA | SWE |
| Site 1 | 0.8 | 0.2 | 0.9 | 0.1 |
| Site 2 | 0.1 | 0.5 | 0.05 | 0.3 |
| Site 3 | 0.1 | 0.3 | 0.05 | 0.6 |

122

| sub-cont | P(wh) | | |
|----------|--------|--------|--------|
| | Site 1 | Site 2 | Site 3 |
| C1 | 1.0 | 0.5 | 0 |
| C2 | 0 | 0.5 | 1 |

106

destination → 112 warehouse → 116 subcontractor

**Fig. 4**

Fig. 5

## Algorithm 1 Local Obfuscation Calculation

```
procedure INITIALIZE(ω)
    for all operator ω do
        D_ω ← FINDMULTIPATHOPERATORS(ω)
    end for
    for all ω ∈ D_ω do
        relAtts ←FINDRELATEDATTRIBUTES
        for all relAtts do
            TRANSMIT P(att_new|att_old) TO ω
        end for
    end for
end procedure



procedure UPONRECEIVEEVENT(e)
    for all att in e do
        if ∃ multPathDependency(att) then
            CALCULATEWORSTCASEOBFUSCATION(ATT)
        else
            CALCULATELOCALOBFUSCATION(ATT)
        end if
    end for
end procedure
```

**Fig. 6**

EP 2 736 002 A1

(a) Latency vs. Attributes

(b) Latency vs. Size of Domain

**Fig. 7**

EP 2 736 002 A1

Fig. 8

**Europäisches Patentamt**
**European Patent Office**
**Office européen des brevets**

## EUROPEAN SEARCH REPORT

**Application Number**

EP 12 00 7880

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | The claimed subject-matter, with due regard to the description and drawings in accordance with Art. 92 EPC, relates to processes comprised in the list of subject-matter and activities excluded from patentability under Art. 52(2) and (3) EPC. The information technology employed as an enabler for carrying out said processes is conventional. Its use for carrying out non-technical processes forms part of common general knowledge and it was widely available to everyone at the date of filing of the present application. No documentary evidence is therefore considered necessary. (See Official Journal EPO 11/2007, pages 592ff and 594ff)<br><br>----- | | INV.<br>G06Q10/00 |

TECHNICAL FIELDS
SEARCHED     (IPC)

G06Q

The present search report has been drawn up for all claims

| Place of search | Date of completion of the search | Examiner |
|---|---|---|
| Munich | 31 January 2013 | Anastasov, Yuliyan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SCHILLING et al.** Distributed Heterogeneous Event Processing - Enhancing Scalability and Interoperability of CEP in an Industrial Context. *Proceedings of the 4th ACM International Conference on Distributed Even-Based Systems,* 12 July 2010